# NEW EUROPEAN PATENT SPECIFICATION

(11) **EP 1 776 503 B2**
(45) Date of publication and mention of the opposition decision: **07.06.2023**
(45) Mention of the grant of the patent: 21.02.2018
(21) Application number: 05759372.5
(22) Date of filing: 09.06.2005
(51) Int. Cl.: D21G 3/00, B82Y 30/00, B82Y 99/00

(54) **PLANAR ELEMENTS FOR USE IN PAPERMAKING MACHINES**
PLANE ELEMENTE ZUR ANWENDUNG BEI PAPIERMASCHINEN
ELEMENTS PLANS DESTINES A DES MACHINES A PAPIER

(30) Priority: 14.06.2004 US 579413 P
(43) Date of publication of application: 25.04.2007
(73) Proprietor: Kadant Inc., Westford MA 01886 (US)
(72) Inventor: DRAPER, Michael, Wigan WN6 0AW, Lancashire (GB); JAMES, John, Jr., Todmordon, Lancs OL146HX (GB)
(74) Representative: Bugnion Genève
(86) International application number: PCT/US2005/020604
(87) International publication number: WO 2005/124019

(56) References cited:
- EP-A- 1 069 235
- WO-A2-02/079318
- WO-A2-03/040223
- WO-A2-2004/024811
- US-A- 4 549 933

## Description

### BACKGROUND OF THE INVENTION

### 1. Field of the Invention

This invention relates generally to planar elements employed in papermaking machines as doctor blades, creping blades, coater blades, top plates in blade holders, and wear surfaces on foil blades, and is concerned in particular with synthetic composite constructions of such planar elements that incorporate nanoparticles in a polymeric resin matrix.

### 2. Description of the Prior Art

Doctor blades contact the surfaces of rolls in papermaking and web converting machines for the purpose of cleaning or sheet removal. Conventional doctor blades have been made from a wide variety of materials including both metals and synthetic polymer composites.

Synthetic doctor blades are traditionally comprised of fabric substrates held together by polymeric resins, with the combination of substrate and resin providing the desired properties for efficient doctoring. Typical substrates include glass, cotton and carbon, whilst both thermoset and thermoplastic resins are used to hold the substrates together, and impart specific properties. Thermoset resins, e.g., epoxy resins, tend to be harder wearing, whilst high performance thermoplastic resins, such as Polyphenylene sulphide (PPS) tend to be able to withstand higher machine temperatures and are less susceptible to chemical attack. A bevel edge is machined into the polymer composite to produce an angled slant at the tip of the blade to aid roll cleaning or sheet removal. The sharper and cleaner this edge is, the more efficient the performance of the doctor blade.

From the prior art, synthetic doctor blades made from many different synthetic materials are known. Forming the preamble of present claim 1, U.S. Patent No. 4,549,933 (Judd et al) describes a doctor blade for a paper machine consisting of a number of alternating layers of fibre and carbon fibre with the fibre layers consisting of cotton, paper, fiberglass, or equivalents thereof. U.S. Patent No. 5,117,264 (Frankel et al) describes synthetic doctor blades made using resins such as polyester and reinforcing carbon and aramid fibres, whilst U.S. Patent No. 4,735,144 (Jenkins) teaches doctor blades comprised of a combined polytatrafluorethylene and polyphenylene sulphide resin system. Document EP-A1-1069235 discloses a conveyor belt for a papermachine to which nanoparticles suspended in a water-alcohol mixture are applied, whereby, after the water-alcohol mixture is allowed to evaporate, a deposit of nanoparticles is left on the belt's surface. Coater blades work in a similar manner to doctor blades, and are used in a wiping mode to meter a layer of liquid onto a sheet of paper or other material. Coater blades do, however, tend to be thinner than conventional doctor blades, typically having thicknesses between 0.3 mm to 0.7 mm. Conventional coater blade materials include steel, stainless steel and steel with a treated edges for prolonging the useful life.

In some applications, the coater blade meters a layer of liquid directly onto a roll surface and the coating is transferred to the sheet of material at a later point. The coater blade is held in a holder similar to a doctor blade. The metered liquid or coating thickness is dependent on the amount of pressure applied to the trailing edge of the coater blade. An increased amount of pressure will decrease the coating thickness. Similarly, a decreased amount of pressure will increase the coating thickness. Coater blades need to be inert to the chemical coatings that they are applying and must have a blemish fee edge.

Top plates form the backbone of a doctoring system connecting the pivoting mechanism and blade keeps. Synthetic top plates are currently made from similar materials to synthetic doctor blades in that they comprise a fibre or fabric reinforced polymeric resin composite. Top plates are flat, with high rigidity in their width, but with flexibility along their length, so that they can conform to a roll surface.

Foil blades, located under the forming fabric, are used to dewater stock/slurry in the forming section of a paper machine. They work by inducing a vacuum under the fabric which, in turn, aids the dewatering of the sheet.

Foil blade profiles have been made from High Density Polyethylene (HDPE), but this material has insufficient wear resistance to survive for the required periods of time in many of these situations. Various ceramic materials including Alumina, Zirconia, Silicon Nitride and Silicon Carbide have been added to the tip of these HDPE profiles to address this problem and produce a more even wear pattern.

### SUMMARY OF THE INVENTION

As herein employed, the term "planar element" is intended to broadly encompass not only all of the above-described doctor blades, coater blades, top plates and foil blades, but also doctor blades without fabric reinforcements, creping blades, and covers for forming boards and suction boxes.

Broadly stated, planar elements in accordance with the present invention comprise synthetic constructions incorporating nanoparticles. Nanoparticles can be as small as 3 atoms thick, typically between 0.1 to 100 nm in size and involve interactions at a molecular or atomic level. These interactions and subsequent resulting properties can differ significantly from those at larger scales and are currently providing superior performance properties in a number of novel applications. For example, nanoparticles have been found to improve the non-stick properties of anti-marine fouling paints and anti-graffiti coatings. They have been found to improve the ultraviolet ray blocking properties of sunscreens, have enabled the production of self-cleaning windows and are being used to produce self-sanitizing tiles for use in clean environments ranging from hospitals to restaurants.

In accordance with the present invention, a planar element construction can be achieved by dispersing nanoparticles in a polymeric resin matrix so as to produce a nano-filled polymer composite. The amount of nanoparticles can comprise between about 0.5 to 75%, preferably about 5 to 20%, and most preferably about 10 to 15% by weight of the polymeric resin matrix.

Nanoparticles may comprise powders, grains, fibres or platelets. Metallic nanoparticles may be selected from the group consisting of metal oxides, carbides or nitrides, metallic complexes, ionic structures and covalent compounds. Non-metallic and/or covalent nanoparticles may be selected from the group consisting of clay particles, silicates, ceramic materials, glass particles, carbon black, fumed silica, calcium carbonate, carbon nanotubes and nanospheres of ceramic powders such as Titanium oxide.

Synthetic doctor blades incorporating nanoparticles in accordance with the present invention have increased mechanical properties, including increased wear and abrasion resistance, improved flexural strength and increased hardness. The nanoparticle reinforced doctor blades perform with improved wear characteristics, with the bevel edge wearing more evenly and maintaining its sharpness and integrity for longer than a comparable blade without any nanoparticle inclusion, whilst the increased hardness results in enhanced impact resistance which can in turn prevent premature failure. The nanoparticles produce a sharper and more homogenous bevel edge than that produced in a non-nanoparticle containing synthetic doctor blade by helping to fill the minute voids that would be otherwise present in the resin matrix.

Additionally, the nanoparticles improve the inter-laminar adhesion of the constituent layers of the synthetic doctor blade, thus improving inter-layer bonding and consequently increasing the resistance to delamination.

A further benefit of a nano-filled composite doctor blade is reduced frictional drag. This enables a papermaker to use less energy in running his machine at a fixed speed, or alternatively enables him to operate at a faster speed without increasing his energy consumption. Nanoparticles also impart additional chemical resistance. This is important in order for doctor blades to resist chemical degradation within the hostile environments in which they operate.

Carbon fibres made from carbon nanotubes and polyacrlonitrile (a carbon fibre precursor) may be used in the fabric substrates, for additional reinforcement, since these fibres tend to be stronger, stiffer and more dimensionally stable than standard carbon fibres.

The inclusion of nanoparticles into a synthetic coater blade is beneficial by both improving the uniformity and homogeneous nature of the coating edge and by imparting additional chemical resistance. Improvements in edge wear resistance, flexural strength, improved adhesion and reduced frictional drag will also be beneficial to coater blade performance.

Nanoparticles dispersed in the polymer resin systems of top plates will increase the strength of these composite structures, thus improving their support capability.

Nanofilled polymeric resin foil blades have an improved wear resistance surface with increased flexural strength, increased fracture toughness and reduced coefficient of friction. The nanoparticles also impart a more consistent wear surface which provides more uniform dewatering, a more even moisture profile and ultimately a better quality of sheet.

### BRIEF DESCRIPTION OF THE DRAWINGS

Figure 1 is a partial cross sectional view, with dimensions exaggerated for purposes of illustration, of a blade construction in accordance with one embodiment of the invention; and
Figure 2 is a view similar to Figure 1 showing an alternative embodiment of the invention.

### DETAILED DESCRIPTION

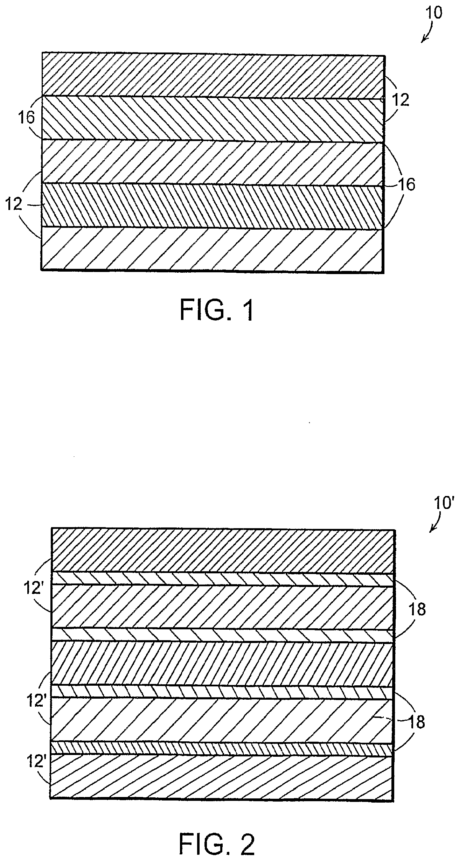

With reference initially to Figure 1, a planar element in the form of a doctor blade constructed in accordance with the present invention is shown at 10 comprising a composite of multiple layers 12 of resin-impregnated fabrics (commonly referred to as "pre-pregs"). The pre-pregs may typically comprise woven or non-woven, unidirectional or multidirectional glass, carbon or aramid fibres, a representative example being 200 gsm plane weave E-glass style 7628 or high strength standard modulus carbon T300 supplied by PD Interglas Technologies Ltd. of Sherborne, U.K.

The layers 12 are impregnated and surface coated with a resin containing a dispersion of clay nanoparticles. A representative resin dispersion is a bisphenol A type epoxy resin supplied by Bakelite Polymers UK Ltd. of Telford, U.K., with clay nanoparticles added to and uniformly dispersed therein in an amount of 15% by weight of the resin matrix. The resin interfaces at 16 serve to adhere the layers 12 together during lamination under conditions of elevated temperature and pressure in accordance with well known practices.

Other manufacturing methods for the planar element 10 known to those skilled in the art include pultrusion, resin injection, and reactive resin injection molding.

The nanoparticles help to fill tiny voids that would be otherwise present in the polymeric resin matrix and are thereby conducive to producing a sharper, more uniform bevel edge. The nanoparticles also have the effect of reinforcing the polymer composite and increasing the mechanical wear or abrasion resistance of the blade against a machine roll, thus rendering the blade particularly well suited for use in modern high speed paper machines, where the speeds attained result in both fast and severe wear of conventional doctor blades. The overall result is that the nanocomposite filled blades wear more evenly, maintaining a sharper bevel edge, than traditional non-nanoparticle containing doctor blade equivalents. Wear test trials running against a dry steel roll, rotating at 1000m per minute / 668 revs per minute, set at an angle of 25° with a load of 0.178kg/cm (1pli) showed that nanofilled composite doctor blades recorded 1.5% less wear per 100 hours than non-nanoparticle containing equivalent doctor blades.

Another benefit of a nanocomposite filled doctor blade is the reduction in drag against the roll surface. The nanoparticles have the effect of reducing the frictional drag enabling machines to run at a constant speed using less power consumption or at a faster speed using the same energy consumption. Testing against a dry steel roll, rotating at 1000m per minute (668 revs per minute), set at an angle of 25° with a load of 0.178kg/cm (1 pli) showed over a 7% reduction in frictional drag.

Intermolecular interactions on an atomic level between the nanoparticles and both the reinforcement substrate and the polymeric resin result in improvements in both interlayer laminate strength and chemical resistance compared to conventional synthetic doctor blades. The fact that the nanoparticles fill minute voids in the resin that would otherwise be present, helps to prevent crack propagation, aids bonding and consequently improves interlayer laminate bond strength.

The incorporation of nanoparticles also increases both the hardness and flexural strength of composite doctor blades. Improvements of 25-30% in Flexural strength and 27-32% in the modulus of elasticity have been recorded in comparisons with non-nanoparticle containing composite blades without any significant loss in glass transition temperature. The improvement in these properties enable the nanocomposite filled doctor blade to withstand higher impacts, loads and shocks.

As an embodiment of this invention, carbon fibres made from carbon nanotubes and polyacrlonitrile (a carbon fibre precursor) could be used in the fabric substrate, for additional reinforcement, since these fibres tend to be stronger, stiffer and more dimensionally stable than standard carbon fibres.

Figure 2 illustrates an alternative blade construction 10' in which the pre-preg layers 12' are adhered together by means of resin film components 18 interposed therebetween. The layers 12' and/or the films 18 may contain nanoparticles.

## Claims

1. A planar element for use in a papermaking machine, wherein the planar element is a planar blade selected from the group consisting essentially of doctor blades, coater blades, top plates, foil blades, creping blades, and covers for forming boards and suction boxes, wherein said planar element comprises a synthetic construction incorporating nanoparticles in a polymeric resin matrix, wherein the nanoparticles have a size between 0.1 to 100 nm wherein the planar element comprises a composite of multiple fabric substrates impregnated with said polymeric resin matrix or the planar element comprises a composite of multiple fabric substrates with film layers interposed therebetween, at least one of said fabric substrates and film layers impregnated with said polymeric resin matrix.

2. The planar element of claim 1, wherein said nanoparticles are selected from the group consisting of powders, grains, fibres and platelets.

3. The planar element of claims 1 or 2, wherein said nanoparticles are metallic and selected from the group consisting of metal oxides, carbides or nitrides, metallic complexes, ionic structure and covalent bonds.

4. The planar element of claims 1 or 2, wherein said nanoparticles are non-metallic and/or covalent and selected from the group consisting of clay particles, silicates, ceramic materials, glass particles, carbon black, fumed silica, calcium carbonate, carbon nanotubes and nanospheres of ceramic powders.

5. The planar element of any one of claims 1 to 3, wherein the amount of said nanoparticles comprise between about 0.5 to 75 % by weight of said polymeric resin matrix.

6. The planar element of claim 5, wherein the amount of said nanoparticles comprise between about 5 to 20 % by weight of said polymeric resin matrix.

7. The planar element of claim 6, wherein the amount of said nanoparticles comprise between about 10 to 15 % by weight of said polymeric resin matrix.

8. The planar element of claim 1, wherein said fabric substrates comprise fibres selected from the group consisting of glass, carbon and aramid fibres.

9. The planar element of claim 8, wherein said fibres are woven.

10. The planar element of claim 8, wherein said fibres are non-woven.

11. The planar element of claim 8, wherein said fibres are unidirectional.

12. The planar element of claim 8, wherein said fibres are multidirectional.

13. The planar element of claim 1, wherein said fabric substrates incorporate carbon fibres made from carbon nanotubes and polyacrylonitrile.

## Patentansprüche

1. Ebenes Element zur Verwendung in einer Papiermaschine, wobei das ebene Element eine ebene Rakel ist, die aus der Gruppe ausgewählt ist, die im Wesentlichen aus Abstreifrakeln, Streichrakeln, Deckplatten, Folienrakeln, Kreppschabern und Abdeckungen von Siebtischen und Saugkästen besteht, wobei das ebene Element eine synthetische Konstruktion umfasst, die Nanopartikel in eine Polymerharzmatrix einbindet, wobei die Nanopartikel eine Größe zwischen 0,1 und 100 nm aufweisen, wobei das ebene Element einen Verbundstoff aus mehreren Textilsubstraten, die mit der Polymerharzmatrix imprägniert sind umfasst, oder das eben Element einen Verbundstoff aus mehreren Textilsubstraten mit zwischengeschobenen Folienlagen umfasst, wobei mindestens eines/eine aus den Textilsubstraten und den Folienschichten mit der Polymerharzmatrix imprägniert ist.

2. Ebenes Element nach Anspruch 1, wobei die Nanopartikel aus der Gruppe ausgewählt sind, die aus Pulvern, Körnern, Fasern und Plättchen besteht.

3. Ebenes Element nach Anspruch 1 oder 2, wobei die Nanopartikel metallisch und aus der Gruppe ausgewählt sind, die aus Metalloxiden, -carbiden oder -nitriden, Metallkomplexen, Ionenstruktur und kovalenten Bindungen besteht.

4. Ebenes Element nach Anspruch 1 oder 2, wobei die Nanopartikel nicht metallisch und/oder kovalent und aus der Gruppe ausgewählt sind, die aus Tonpartikeln, Silicaten, Keramikmaterialien, Glaspartikeln, Ruß, pyrogenem Siliciumoxid, Calciumcarbonat, Kohlenstoff-Nanoröhrchen und Nanokügelchen aus keramischen Pulvern besteht.

5. Ebenes Element nach einem der Ansprüche 1 bis 3, wobei die Menge der Nanopartikel etwa 0,5 bis 75 Gew.-% der Polymerharzmatrix beträgt.

6. Ebenes Element nach Anspruch 5, wobei die Menge der Nanopartikel etwa 5 bis 20 Gew.-% der Polymerharzmatrix beträgt.

7. Ebenes Element nach Anspruch 6, wobei die Menge der Nanopartikel etwa 10 bis 15 Gew.-% der Polymerharzmatrix beträgt.

8. Ebenes Element nach Anspruch 1, wobei die Textilsubstrate Fasern umfassen, die aus der Gruppe ausgewählt sind, die aus Glas-, Kohlenstoff- und Aramidfasern besteht.

9. Ebenes Element nach Anspruch 8, wobei die Fasern verwebt sind.

10. Ebenes Element nach Anspruch 8, wobei die Fasern nicht verwebt sind.

11. Ebenes Element nach Anspruch 8, wobei die Fasern unidirektional sind.

12. Ebenes Element nach Anspruch 8, wobei die Fasern multidirektional sind.

13. Ebenes Element nach Anspruch 1, wobei die Textilsubstrate Kohlenstofffasern enthalten, die aus Kohlenstoff-Nanoröhrchen und Polyacrylnitril bestehen.

## Revendications

1. Élément plan destiné à une utilisation dans une machine de fabrication de papier, dans lequel l'élément plan est une lame plane choisie dans le groupe constitué essentiellement de lames de docteur, de lames de couchage, de plaques supérieures, de lames de type feuille, de lames de crêpage, et de couvercles pour former des cartons et des caisses aspirantes, dans lequel ledit élément plan comprend une construction synthétique incorporant des nanoparticules dans une matrice de résine polymère, dans lequel les nanoparticules ont une taille comprise entre 0,1 et 100 nm, dans lequel l'élément plan comprend un composite de substrats de tissus multiples imprégnés avec ladite matrice de résine polymère ou l'élément plan comprend un composite de substrats de tissus multiples avec des couches pelliculaires intercalées entre eux, au moins l'un desdits substrats de tissu et des couches pelliculaires étant imprégné avec ladite matrice de résine polymère.

2. Élément plan selon la revendication 1, dans lequel lesdites nanoparticules sont choisies dans le groupe constitué de poudres, grains, fibres et plaquettes.

3. Élément plan selon la revendication 1 ou 2, dans lequel lesdites nanoparticules sont métalliques et choisies dans le groupe constitué d'oxydes métalliques, de carbures ou nitrures, de complexes métalliques, de structures ioniques et de liaisons covalentes.

4. Élément plan selon la revendication 1 ou 2, dans lequel lesdites nanoparticules sont non métalliques et/ou covalentes et choisies dans le groupe constitué de particules d'argile, de silicates, de matériaux céramiques, de particules de verre, de noir de carbone, de silice sublimée, de carbonate de calcium, de nanotubes de carbone et de nanosphères de poudres céramiques.

5. Élément plan selon l'une quelconque des revendications 1 à 3, dans lequel la quantité desdites nanoparticules comprend entre environ 0,5 à 75 % en poids de ladite matrice de résine polymère.

6. Élément plan selon la revendication 5, dans lequel la quantité desdites nanoparticules comprend entre environ 5 à 20 % en poids de ladite matrice de résine polymère.

7. Élément plan selon la revendication 6, dans lequel la quantité desdites nanoparticules comprend entre environ 10 à 15 % en poids de ladite matrice de résine polymère.

8. Élément plan selon la revendication 1, dans lequel lesdits substrats de tissu comprennent des fibres choisies dans le groupe constitué de verre, de carbone et de fibres aramides.

9. Élément plan selon la revendication 8, dans lequel lesdites fibres sont tissées.

10. Élément plan selon la revendication 8, dans lequel lesdites fibres sont non tissées.

11. Élément plan selon la revendication 8, dans lequel lesdites fibres sont unidirectionnelles.

12. Élément plan selon la revendication 8, dans lequel lesdites fibres sont multidirectionnelles.

13. Élément plan selon la revendication 1, dans lequel lesdits substrats de tissu incorporent des fibres de carbone constituées de nanotubes de carbone et de polyacrylonitrile.
